# FASCICULE DE BREVET EUROPEEN

(11) **EP 1 748 972 B1**
(45) Date de publication et mention de la délivrance du brevet: **17.10.2018**
(21) Numéro de dépôt: 05770900.8
(22) Date de dépôt: 11.05.2005
(51) Int. Cl.: C06B 45/14, C06C 9/00, B60R 21/264

(54) **COMPOSITION PYROTECHNIQUE DOSABLE UTILISABLE COMME FUSIBLE THERMIQUE DANS UN GENERATEUR DE GAZ ET GENERATEUR DE GAZ INCLUANT UN COMPOSE AYANT LADITE COMPOSITION**
DOSIERBARE PYROTECHNISCHE ZUSAMMENSETZUNG ZUR VERWENDUNG IN FORM EINER THERMISCHEN SICHERUNG FÜR EINEN GASGENERATOR UND GASGENERATOR MIT EINER VERBINDUNG, DIE DIESE ZUSAMMENSETZUNG ENTHÄLT.
DOSABLE PYROTECHNIC COMPOSITION USABLE IN THE FORM OF A THERMAL FUSE FOR A GAS GENERATOR AND A GAS GENERATOR COMPRISING A COMPOUND CONTAINING SAID COMPOSITION

(30) Priorité: 13.05.2004 FR 0405171
(43) Date de publication de la demande: 07.02.2007
(73) Titulaire: ARIANEGROUP SAS, 75015 Paris (FR)
(72) Inventeur: MARLIN, Frédéric, F-33160 SAINT MEDARD EN JALLES (FR); MARINO, Gérard, F-33160 SAINT MEDARD EN JALLES (FR)
(74) Mandataire: Le Roux, Martine
(86) Numéro de dépôt international: PCT/FR2005/001175
(87) Numéro de publication internationale: WO 2005/115948

(56) Documents cités:
- EP-A- 0 665 138
- WO-A-98/18661
- DE-A1- 10 060 320
- FR-A- 2 266 674
- US-A- 5 834 679

## Description

La présente invention concerne la génération pyrotechnique de gaz. Elle concerne plus particulièrement les compositions d'autoinflammation dont le rôle est de déclencher préventivement un générateur de gaz lorsque celui-ci est soumis à une température anormalement élevée.

Un générateur de gaz permet, grâce à l'initiation d'une charge pyrotechnique génératrice de gaz dite charge principale, de générer en un temps très court une quantité de gaz par exemple pour gonfler un coussin de protection. Lors d'une brusque montée en température, causée par exemple par un incendie, la charge pyrotechnique du générateur ne va pas brûler normalement et peut réagir de manière violente et même exploser, exposant les personnes environnantes à des graves dangers. Afin de prévenir cette initiation intempestive et incontrôlée du générateur de gaz provoquée par un échauffement anormal, une composition pyrotechnique jouant le rôle de fusible thermique permet la mise à feu de la charge génératrice de gaz principale avant que cette charge n'atteigne sa température d'autoinflammation. Pour que la composition utilisée remplisse parfaitement sa fonction de fusible thermique, plusieurs critères doivent être respectés. D'une manière générale, ces critères sont les suivants :
- la composition jouant le rôle de fusible thermique doit disposer d'une température d'autoinflammation significativement inférieure à celle de la composition génératrice de gaz ;
- la composition doit être disposée de manière reproductible dans une zone de transfert thermique privilégiée pour que l'autoinflammation ait lieu de manière reproductible avant le fonctionnement de la composition génératrice de gaz ;
- la composition doit présenter, pour une masse faible (généralement inférieure à 200 mg), une enthalpie de réaction suffisamment élevée pour permettre son initiation tout en limitant son impact sur le fonctionnement normal du générateur.

En plus de ces caractéristiques, la composition doit pouvoir passer toutes les épreuves de qualification mécaniques et thermiques du générateur et doit perturber le moins possible le fonctionnement normal du générateur, par exemple au niveau de la balistique ou de la toxicité des gaz générés.

La plupart des formulations utilisées comme fusible thermique répondent bien aux premier et troisième critères présentés ci-dessus. C'est le cas dans le brevet US 6,453,816 qui décrit une composition pyrotechnique utilisée comme fusible thermique comprenant un composé tel qu'un oxyde métallique et un composé choisi parmi les oxalates, les peroxodisulfates, les permanganates, les nitrates, sulfamates... La composition peut comprendre un explosif tel que l'oxynitrotriazolone (ONTA) ou le nitrate de guanidine. La composition décrite dans ce document peut être mélangée à la charge pyrotechnique principale du générateur de gaz, en utilisant éventuellement un agent de liaison. Dans ce cas, la composition peut représenter de 0,1 à 20% et préférentiellement de 0,1 à 5% de la masse totale de la charge pyrotechnique principale du générateur. Ce brevet prévoit également que la composition utilisée comme fusible thermique peut être séparée de la charge pyrotechnique principale. Dans ce cas, la composition doit être disposée dans une zone particulièrement exposée thermiquement pour pouvoir être initiée avant la charge pyrotechnique principale en cas d'échauffement anormal du générateur. La composition peut alors prendre la forme de pastilles.

Le brevet précité souligne que la composition, par exemple sous forme de pastilles, doit être placée dans une zone exposée thermiquement. Cependant, il ne mentionne aucun moyen d'intégration des pastilles. Ceci a son importance, car cela peut avoir une influence notable sur le fonctionnement du générateur en autoinflammation ainsi que sur son prix de revient. Avec une composition sous forme de pastilles, il est en effet difficile d'obtenir une reproductibilité dans le fonctionnement de la composition fusible thermique.

Le brevet US 5,834,679 décrit des formulations utilisées comme fusible thermique :
- dosables et déposables du fait de l'intervention, en leur sein, d'un auxiliaire de manipulation : un solvant, aqueux ou organique. Ledit solvant rend possible la dépose mais alourdit considérablement la mise en oeuvre de ladite dépose (qui doit notamment inclure l'élimination dudit solvant : le séchage du produit déposé). Par ailleurs, un solvant aqueux est susceptible d'engendrer des problèmes de corrosion (d'où l'intervention prévue, dans ledit brevet US, d'une couche protectrice), un solvant organique implique la gestion délicate de composés organiques volatils (COV) ...
- à faible taux de liant (ledit liant représente au plus 5% en poids de la composition et ne peut, à un tel taux, assurer un collage efficace) ...

Le but de l'invention est donc de proposer une composition pyrotechnique destinée à être utilisée comme fusible thermique dans un générateur de gaz, qui peut être facilement intégrée dans ledit générateur pyrotechnique de gaz et qui permette une parfaite reproductibilité lors du fonctionnement en autoinflammation du générateur.

Ce but est atteint par une composition d'un composé pyrotechnique selon les revendications 1 à 15.

Selon l'invention, la composition pyrotechnique *per se* (sans ajout de solvant) est dosable et déposable comme une colle, ce qui lui permet de pouvoir être disposée facilement dans le générateur de gaz sans avoir recours à des moyens spécifiques d'intégration.

La composition selon l'invention peut être déposée, par exemple à l'aide d'un doseur, sous la forme d'une colle, à la masse souhaitée et à l'emplacement désiré dans le générateur et ceci en assurant un bon contact thermique avec le support sur lequel elle est déposée. Le bon contact thermique ainsi que la possibilité de coller la composition sur une partie métallique conductrice de chaleur du générateur permet d'améliorer le fonctionnement du générateur en autoinflammation par rapport aux générateurs utilisant des solutions existantes. La solution de l'invention permet d'obtenir un bon fonctionnement même dans le cas où le composé obtenu aurait une température d'autoinflammation élevée, supérieure aux températures d'autoinflammation de pastilles ou de poudres.

Selon l'invention, la composition selon l'invention se démarque des formulations classiques utilisées en sécurité automobile au niveau de ses caractéristiques fonctionnelles. En effet, la composition selon l'invention ne doit pas répondre à certains critères spécifiques aux compositions classiques utilisées en sécurité automobile. Ces critères sont par exemple la recherche d'une vitesse de combustion particulière ou la nécessité d'obtenir des gaz peu toxiques. La composition selon l'invention doit simplement :
- résister aux contraintes thermiques et mécaniques exercées sur le générateur,
- être compatibles avec les charges pyrotechniques génératrices de gaz présentes dans le générateur,
- avoir une température d'autoinflammation la plus basse possible.

Selon l'invention, il s'agit donc d'obtenir un produit totalement stable à 110°C et qui réagisse rapidement et de manière exothermique entre 155°C et 185°C. La température de 110°C correspond à une température d'un test de stabilité couramment effectué pour les formulations utilisées en sécurité automobile.

La composition pyrotechnique de l'invention se caractérise par la nature du liant qu'elle renferme et par le taux dudit liant en son sein. Ledit liant est choisi dans la famille des époxydes ou dans celle des polybutadiènes (liants réticulables, thermodurcissables) ; il est présent à un taux tel que la composition peut être dosée et déposée sous la forme d'une colle (sans intervention de solvant). Il intervient en une quantité telle qu'il assure la fonction de colle.

En fait, ledit liant, au sein des compositions, assure les trois fonctions :
- de cohésion des charges,
- de participation active à la réaction pyrotechnique, et
- de colle sur le support (directement sur le support. Il n'y a *a priori* nul besoin de prévoir une couche protectrice et/ou d'accrochage).

A cette fin, ledit liant est présent à raison d'au moins 15% en masse de la masse totale de la composition.

Il est avantageusement présent à raison de moins de 30% en masse, très avantageusement présent à raison de moins de 25% en masse, de la masse totale de la composition. Il intervient, en tout état de cause, à un taux raisonnable, compatible avec les caractéristiques de combustion recherchées pour ladite composition.

Le taux de liant varie suivant la nature exacte du liant. Les critères principaux de choix du liant sont la faisabilité du mélange au taux de charge objectif, la compatibilité avec les charges à une température de 110°C et l'obtention d'une combustion vive pour une masse faible permettant l'initiation de la composition génératrice de gaz.

Après avoir été déposée sur son support la composition durcit par réticulation.

Selon l'invention, dans la composition, le liant sert de vecteur de dépose et participe à la combustion de la composition en tant que réducteur. Cependant, il n'a aucune influence sur l'obtention d'une température d'autoinflammation basse. La température d'autoinflammation basse est obtenue grâce aux charges qui sont introduites dans le liant.

Selon un premier mode de réalisation de l'invention, la composition comprend un mélange oxydant/réducteur. Un tel mélange oxydant/réducteur doit permettre d'obtenir la bonne température d'autoinflammation.

Selon une variante préférée de ce premier mode de réalisation, le liant est un liant époxy, l'oxydant choisi est un chlorate de métal alcalin et le réducteur est un sucre. Dans ce cas, la température d'autoinflammation suffisante est obtenue grâce au couple chlorate de métal alcalin/sucre.

Selon une particularité de cette variante, le liant, par exemple une résine époxyde, est présent à un pourcentage massique compris entre 18 et 22% de la masse totale de la composition.

Selon une autre particularité, le chlorate de métal alcalin est le chlorate de sodium ou de potassium et il est présent à un pourcentage massique compris entre 30 et 50% de la masse totale de la composition.

Selon une autre particularité, le sucre est présent à un pourcentage massique compris entre 15 et 25% de la masse totale de la composition.

Selon une autre particularité de cette variante, la composition comprend de l'aluminium et un perchlorate de métal alcalin, pour améliorer la combustion et augmenter le potentiel calorimétrique.

Selon une autre particularité, l'aluminium est présent à un pourcentage massique compris entre 5 et 15% de la masse totale de la composition.

Selon une autre particularité, le perchlorate de métal alcalin est le perchlorate de potassium, ce composé étant présent dans une proportion inférieure à 20% de la masse totale de la composition.

Selon un second mode de réalisation, la composition comprend un composé oxydant et un catalyseur de décomposition de ce composé oxydant.

Selon une particularité de ce second mode de réalisation, le liant est une résine époxyde, l'oxydant du perchlorate d'ammonium et le catalyseur de décomposition un composé ferrocénique.

Selon une autre particularité, la résine époxyde est présente à un pourcentage massique compris entre 15 et 30%, avantageusement entre 16 et 25%, de la masse totale de la composition.

Selon une autre particularité, le perchlorate d'ammonium est présent à un pourcentage massique compris entre 60 à 88%, avantageusement entre 68 et 88%, de la masse totale de la composition.

Un autre but de l'invention est de proposer un générateur de gaz dans lequel un composé jouant le rôle de fusible thermique peut être facilement intégré dans une zone particulièrement exposée thermiquement.

Ce but est atteint par un générateur pyrotechnique de gaz comprenant une charge pyrotechnique principale génératrice de gaz permettant par exemple de gonfler un coussin de protection, ce générateur étant caractérisé en ce qu'il comporte un composé pyrotechnique auto-inflammable ayant une composition telle que définie dans l'un des modes de réalisation ci-dessus, et dont la température d'autoinflammation est inférieure à celle de la charge pyrotechnique principale.

L'invention est plus particulièrement illustrée dans les exemples suivants :

### Exemple n°1

| Matières premières | % dans la composition |
|---|---|
| Liant époxy | 15 à 30 |
| Catalyseur de décomposition de type férrocénique | 2 à 5 |
| Aluminium | 0 à 4 |
| Oxyde de fer | 0 à 2 |
| Perchlorate d'ammonium | 60 à 88 |

Le mélange de diverses granulométries de perchlorate d'ammonium ainsi que le taux de liant permet l'adaptation de la rhéologie de la pâte obtenue lors du mélange des matières premières aux besoins de dépose et de conservation du produit pendant la durée de mise en oeuvre.

Les caractéristiques principales moyennes en tant que fusible thermique des formulations suivant l'exemple 1 sont les suivantes :
- Température d'autoinflammation par chauffage progressif à une vitesse de 5°C/min. comprises entre 180 et 190°C.
- Pic de décomposition en DSC à 5°C/min, onset du pic vers 180°C.
- Stabilité thermique acquise lors de test de stabilité sous vide à 110°C.
- Fonctionnement conservé après passage 400 h à 107°C.

Dans l'exemple n°1, la température d'autoinflammation est obtenue par abaissement de la température de décomposition du perchlorate d'ammonium à l'aide de catalyseurs de décomposition. Le liant époxy fait office de réducteur lors de la combustion.

### Exemple n°2

| Matières premières | % dans la composition |
|---|---|
| Liant époxy | 18 à 22 |
| Chlorate de sodium | 30 à 50 |
| Perchlorate de potassium | 0 à 20 |
| Sucre | 15 à 25 |
| Aluminium | 5 à 15 |

Les caractéristiques moyennes en tant que fusible thermique des formulations suivant l'exemple 2 sont les suivantes :
- Température d'autoinflammation par chauffage progressif à une vitesse de 5°C/min. comprises entre 178 et 185°C.
- Pic de décomposition en DSC à 5°C/min, onset du pic vers 180°C.
- Stabilité thermique acquise lors de test de stabilité sous vide à 110°C.
- Fonctionnement conservé après passage 400 h à 107°C.

Dans l'exemple 2, la température d'autoinflammation est obtenue à l'aide du couple chlorate/sucre qui en l'absence de liant permet d'obtenir une autoinflammation vers 160°C. Le chlorate de sodium peut être remplacé par le chlorate de potassium.

L'enrobage du chlorate dans un liant permet d'obtenir un produit compatible avec les oxydants à base d'ions ammonium (comme par exemple le perchlorate d'ammonium).

Le test DSC (pour "Differential Scanning Calorimetry") utilisé dans les exemples 1 à 2 ci-dessus est une méthode d'analyse thermique qui permet de mesurer la puissance thermique libérée ou absorbée par un produit en fonction d'un programme de montée en température (dans les exemples 1 à 2, montée de 5°C par minute). Cette méthode permet de mesurer par exemple des chaleurs spécifiques, des enthalpies réactionnelles ou des énergies de changement de phase.

## Revendications

1. Composition d'un composé pyrotechnique convenant comme fusible thermique dans un générateur de gaz comprenant une charge pyrotechnique, ledit composé pyrotechnique ayant une température d'autoinflammation inférieure à celle de la charge pyrotechnique du générateur de manière à pouvoir initier en combustion la charge pyrotechnique, en cas d'échauffement anormal du générateur, avant que ladite charge pyrotechnique n'atteigne sa température d'autoinflammation, ladite composition, stable à 110°C, auto-inflammable et réagissant de manière exothermique à basse température, étant **caractérisée en ce qu'**elle est auto-inflammable et réagit de manière exothermique entre 155°C et 185°C ; et
**en ce qu'**elle comporte un liant ; ledit liant étant choisi dans la famille des époxydes ou dans celle des polybutadiènes et étant présent dans la composition à un taux d'au moins 15% de la masse totale de la composition, de sorte que ladite composition peut être dosée et déposée, sans ajout de solvant, sous la forme d'une colle sur tout support approprié de générateur de gaz.

2. Composition selon la revendication 1, **caractérisée en ce que** ledit liant est un liant de type époxy.

3. Composition selon la revendication 1 ou 2, **caractérisée en ce que** ledit liant est présent dans ladite composition à un taux inférieur à 30% de la masse totale de ladite composition.

4. Composition selon l'une quelconque des revendications 1 à 3, **caractérisée en ce qu'**elle comprend un mélange oxydant/réducteur.

5. Composition selon la revendication 4, **caractérisée en ce que** le liant est de type époxy, **en ce que** l'oxydant est un chlorate de métal alcalin et **en ce que** le réducteur est un sucre.

6. Composition selon la revendication 5, **caractérisée en ce que** le liant de type époxy est présent à un pourcentage massique compris entre 18 et 22% de la masse totale de la composition.

7. Composition selon la revendication 5 ou 6, **caractérisée en ce que** le chlorate de métal alcalin est le chlorate de sodium ou de potassium et **en ce qu'**il est présent à un pourcentage massique compris entre 30 et 50% de la masse totale de la composition.

8. Composition selon l'une quelconque des revendications 5 à 7, **caractérisée en ce que** le sucre est présent à un pourcentage massique compris entre 15 et 25% de la masse totale de la composition.

9. Composition selon l'une quelconque des revendications 5 à 8, **caractérisée en ce qu'**elle comprend de l'aluminium et un perchlorate de métal alcalin.

10. Composition selon la revendication 9, **caractérisée en ce que** l'aluminium est présent à un pourcentage massique compris entre 5 et 15% de la masse totale de la composition.

11. Composition selon la revendication 9 ou 10, **caractérisée en ce que** le perchlorate de métal alcalin est le perchlorate de potassium et **en ce qu'**il est présent dans une proportion inférieure à 20% de la masse totale de la composition.

12. Composition selon l'une quelconque des revendications 1 à 3, **caractérisée en ce qu'**elle comprend un composé oxydant et un catalyseur de décomposition de ce composé oxydant.

13. Composition selon la revendication 12, **caractérisée en ce que** le liant est de type époxy, l'oxydant du perchlorate d'ammonium et le catalyseur de décomposition un composé ferrocénique.

14. Composition selon l'une des revendications 1 ou 2, **caractérisée en ce que** le liant de type époxy est présent à un pourcentage massique compris entre 15 et 30% de la masse totale de la composition et **en ce qu'**elle comprend du perchlorate d'ammonium comme composé oxydant et un composé ferrocénique comme catalyseur de décomposition dudit composé oxydant.

15. Composition selon la revendication 13 ou 14, **caractérisée en ce que** le perchlorate d'ammonium est présent à un pourcentage massique compris entre 60 et 88% de la masse totale de la composition.

16. Générateur pyrotechnique de gaz comprenant une charge pyrotechnique génératrice de gaz, **caractérisé en ce qu'**il comprend également une composition selon l'une quelconque des revendications 1 à 15, dont la température d'autoinflammation est inférieure à celle de ladite charge pyrotechnique génératrice de gaz.

17. Utilisation d'une composition selon l'une quelconque des revendications 1 à 15, comme fusible thermique dans un générateur de gaz comprenant une charge pyrotechnique, ledit composé ayant une température d'autoinflammation inférieure à celle de ladite charge pyrotechnique dudit générateur de manière à pouvoir initier en combustion ladite charge pyrotechnique, en cas d'échauffement anormal du générateur, avant que ladite charge pyrotechnique n'atteigne sa température d'autoinflammation.

## Patentansprüche

1. Zusammensetzung einer pyrotechnischen Verbindung, die als thermische Sicherung in einem Gasgenerator geeignet ist, umfassend eine pyrotechnische Charge, wobei die pyrotechnische Verbindung eine Selbstentzündungstemperatur aufweist, die niedriger ist als jene der pyrotechnischen Charge des Generators, um eine Verbrennung der pyrotechnischen Charge im Fall der abnormalen Erhitzung des Generators initiieren zu können, bevor die pyrotechnische Charge ihre Selbstentzündungstemperatur erreicht, wobei die Zusammensetzung, die bei 110 °C stabil ist, selbstentzündlich ist und exotherm bei niedriger Temperatur reagiert, **dadurch gekennzeichnet ist, dass** sie selbstentzündlich ist und zwischen 155 °C und 185 °C exotherm reagiert, und
dadurch, dass sie ein Bindemittel umfasst; wobei das Bindemittel aus der Familie von Epoxiden oder jener von Polybutadienen ausgewählt ist und in der Zusammensetzung mit einem Gehalt von mindestens 15 %, bezogen auf die Gesamtmasse der Zusammensetzung, vorliegt, so dass die Zusammensetzung, ohne Zusatz eines Lösungsmittels, in der Form eines Klebers auf jeden geeigneten Träger des Gasgenerators dosiert und abgeschieden werden kann.

2. Zusammensetzung nach Anspruch 1, **dadurch gekennzeichnet, dass** das Bindemittel ein Bindemittel vom Typ Epoxid ist.

3. Zusammensetzung nach Anspruch 1 oder 2, **dadurch gekennzeichnet, dass** das Bindemittel in der Zusammensetzung mit einem Gehalt von weniger als 30 %, bezogen auf die Gesamtmasse der Zusammensetzung, vorliegt.

4. Zusammensetzung nach einem der Ansprüche 1 bis 3, **dadurch gekennzeichnet, dass** sie eine Mischung von Oxidationsmittel/Reduktionsmittel umfasst.

5. Zusammensetzung nach Anspruch 4, **dadurch gekennzeichnet, dass** das Bindemittel vom Typ Epoxid ist, und dadurch, dass das Oxidationsmittel ein Alkalimetallchlorat ist, und dadurch, dass das Reduktionsmittel ein Zucker ist.

6. Zusammensetzung nach Anspruch 5, **dadurch gekennzeichnet, dass** das Bindemittel vom Typ Epoxid mit einem Masseprozentsatz zwischen 18 und 22 %, bezogen auf die Gesamtmasse der Zusammensetzung, vorliegt.

7. Zusammensetzung nach Anspruch 5 oder 6, **dadurch gekennzeichnet, dass** das Alkalimetallchlorat Natrium- oder Kaliumchlorat ist, und dadurch, dass es mit einem Masseprozentsatz zwischen 30 und 50 %, bezogen auf die Gesamtmasse der Zusammensetzung, vorliegt.

8. Zusammensetzung nach einem der Ansprüche 5 bis 7, **dadurch gekennzeichnet, dass** der Zucker mit einem Masseprozentsatz zwischen 15 und 25 %, bezogen auf die Gesamtmasse der Zusammensetzung, vorliegt.

9. Zusammensetzung nach einem der Ansprüche 5 bis 8, **dadurch gekennzeichnet, dass** sie Aluminium und ein Alkalimetallperchlorat umfasst.

10. Zusammensetzung nach Anspruch 9, **dadurch gekennzeichnet, dass** das Aluminium mit einem Masseprozentsatz zwischen 5 und 15 %, bezogen auf die Gesamtmasse der Zusammensetzung, vorliegt.

11. Zusammensetzung nach Anspruch 9 oder 10, **dadurch gekennzeichnet, dass** das Alkalimetallperchlorat Kaliumperchlorat ist, und dadurch, dass es mit einer Menge von weniger als 20 %, bezogen auf die Gesamtmasse der Zusammensetzung, vorliegt.

12. Zusammensetzung nach einem der Ansprüche 1 bis 3, **dadurch gekennzeichnet, dass** sie eine oxidierende Verbindung und einen Zersetzungskatalysator dieser oxidierenden Verbindung umfasst.

13. Zusammensetzung nach Anspruch 12, **dadurch gekennzeichnet, dass** das Bindemittel vom Typ Epoxid ist, das Oxidationsmittel Ammoniumperchlorat ist, und der Zersetzungskatalysator eine Ferrocen-Verbindung ist.

14. Zusammensetzung nach einem der Ansprüche 1 oder 2, **dadurch gekennzeichnet, dass** das Bindemittel vom Typ Epoxid mit einem Masseprozentsatz zwischen 15 und 30 %, bezogen auf die Gesamtmasse der Zusammensetzung, vorliegt, und dadurch, dass sie Ammoniumperchlorat als oxidierende Verbindung und eine Ferrocen-Verbindung als Zersetzungskatalysator der oxidierenden Verbindung umfasst.

15. Zusammensetzung nach Anspruch 13 oder 14, **dadurch gekennzeichnet, dass** das Ammoniumperchlorat mit einem Masseprozentsatz zwischen 60 und 88 %, bezogen auf die Gesamtmasse der Zusammensetzung, vorliegt.

16. Pyrotechnischer Gasgenerator, umfassend eine pyrotechnische Charge, die Gas erzeugt, **dadurch gekennzeichnet, dass** er auch eine Zusammensetzung nach einem der Ansprüche 1 bis 15 umfasst, deren Selbstentzündungstemperatur niedriger ist als jene der pyrotechnischen Charge, die Gas erzeugt.

17. Verwendung einer Zusammensetzung nach einem der Ansprüche 1 bis 15, als thermische Sicherung in einem Gasgenerator, umfassend eine pyrotechnische Charge, wobei die Verbindung eine Selbstentzündungstemperatur aufweist, die niedriger ist als jene der pyrotechnischen Charge des Generators, um eine Verbrennung der pyrotechnischen Charge im Fall der abnormalen Erhitzung des Generators initiieren zu können, bevor die pyrotechnische Charge ihre Selbstentzündungstemperatur erreicht.

## Claims

1. Composition of a pyrotechnic compound suitable as a thermal fuse in a gas generator comprising a pyrotechnic charge, said pyrotechnic compound having a self-ignition temperature that is lower than that of the pyrotechnic charge of the generator so as to be capable of initiating combustion of the pyrotechnic charge in the event of abnormal heating of the generator before said pyrotechnic charge reaches its self-ignition temperature, said composition, stable at 110°C, self-ignitable and exothermically reacting at low temperature, being **characterized in that** it is self-ignitable and exothermically reacts between 155°C and 185°C; and
**in that** it includes a binder, said binder being selected from the epoxy family or the polybutadiene family, and being present in the composition in an amount of at least 15% of the total composition weight, so that said composition can be metered out and deposited, without addition of any solvent, in the form of an adhesive onto any appropriate support of the generator.

2. The composition according to claim 1, **characterized in that** said binder is an epoxy type binder.

3. The composition according to claim 1 or 2, **characterized in that** said binder is present, in said composition, in an amount of less than 30% of the total composition weight.

4. The composition according to any one of claims 1 to 3, **characterized in that** it comprises an oxidizer/reducer mixture.

5. The composition according to claim 4, **characterized in that** the binder is an epoxy type binder, **in that** the oxidizer is an alkali metal chlorate and **in that** the reducer is a sugar.

6. The composition according to claim 5, **characterized in that** the epoxy type binder is present in a weight percentage in the range 18% to 22% of the total composition weight.

7. The composition according to claim 5 or claim 6, **characterized in that** the alkali metal chlorate is sodium or potassium chlorate and **in that** it is present in a weight percentage in the range 30% to 50% of the total composition weight.

8. The composition according to any one of claims 5 to 7, **characterized in that** the sugar is present in a weight percentage in the range 15% to 25% of the total composition weight.

9. The composition according to any one of claims 5 to 8, **characterized in that** it comprises aluminum and an alkali metal perchlorate.

10. The composition according to claim 9, **characterized in that** the aluminum is present in a weight percentage in the range 5% to 15% of the total composition weight.

11. The composition according to claim 9 or claim 10, **characterized in that** the alkali metal perchlorate is potassium perchlorate and **in that** it is present in a proportion of less than 20% of the total composition weight.

12. The composition according to any one of claims 1 to 3, **characterized in that** it comprises an oxidizing compound and a decomposition catalyst for said oxidizing compound.

13. The composition according to claim 12, **characterized in that** the binder is an epoxy type binder, the oxidizer is ammonium perchlorate and the decomposition catalyst is a ferrocene compound.

14. The composition according to claim 1 or 2, **characterized in that** the epoxy type binder is present in a weight percentage in the range 15% to 30% of the total composition weight and **in that** it comprises ammonium perchlorate as oxidizing component and a ferrocene compound as decomposition catalyst of said oxidizing component.

15. The composition according to claim 13 or claim 14, **characterized in that** the ammonium perchlorate is present in a weight percentage in the range 60% to 88% of the total composition weight.

16. A pyrotechnic gas generator comprising a gas-generating pyrotechnic charge, **characterized in that** it also comprises a composition in accordance with any one of claims 1 to 15, the self-ignition temperature of which is lower than that of said pyrotechnic gas-generating charge.

17. Use of a composition according to any one of claims 1 to 15, as a thermal fuse in a gas generator comprising a pyrotechnic charge, said compound having a self-ignition temperature that is lower than that of the pyrotechnic charge of the generator so as to be capable of initiating combustion of the pyrotechnic charge in the event of abnormal heating of the generator before said pyrotechnic charge reaches its self-ignition temperature.
